# EUROPÄISCHE PATENTSCHRIFT

(11) **EP 3 132 677 B1**
(45) Veröffentlichungstag und Bekanntmachung des Hinweises auf die Patenterteilung: **18.10.2017**
(21) Anmeldenummer: 15181300.3
(22) Anmeldetag: 17.08.2015
(51) Int. Cl.: A01G 17/14

(54) **SPALIERPFAHL FÜR DEN WEIN- ODER OBSTBAU**
TRELLIS POST FOR VINE OR FRUIT CULTIVATION
PIEU D'ESPALIER POUR LA VITICULTURE ET L'ARBORICULTURE FRUITIERE

(43) Veröffentlichungstag der Anmeldung: 22.02.2017
(73) Patentinhaber: Voestalpine Krems GmbH, 3500 Krems an der Donau (AT)
(72) Erfinder: Stummvoll, Matthias, 3610 Weissenkirchen (AT); Wallisch, Christoph, 3812 Gr. Siegharts (AT); Harrer, Ewald, 3500 Krems (AT)
(74) Vertreter: Jell, Friedrich

(56) Entgegenhaltungen:
- WO-A1-02/18730
- DE-A1- 3 533 963
- DE-A1-102004 011 778
- FR-A1- 2 311 497

## Beschreibung

Die Erfindung betrifft Spalierpfahl für den Wein- oder Obstbau mit einem, insbesondere offenen, Hohlprofil, das mindestens einen Schenkel aufweist, wobei dieser Schenkel eine in Längsrichtung des Hohlprofils verlaufende, offene und zurückspringende Längssicke mit mindestens einem von ihrem Sickenboden abstehenden Haken aufweist, der mit dem Sickenboden eine Drahtaufnahme für einen Spanndraht ausbildet, und wobei dieser, durch die Längssicke in zwei Schenkelseiten geteilte Schenkel auf seiner ersten Schenkelseite eine erste in Querrichtung des Hohlprofils verlaufende, offene und zurückspringende Quersicke aufweist, die an die Längssicke anschließt und beim Haken angeordnet ist, wobei diese erste Quersicke mit ihrer im Vergleich zur Aufnahmelänge der Drahtaufnahme kleineren Sickenweite zur Drahtsicherung aufgrund des der Drahtaufnahme schräg ab einem Mindestwinkel zu entnehmenden Spanndrahts ausgebildet ist.

Um einen Spanndraht in einer Drahtaufnahme eines Spalierpfahls zu sichern, ist es aus dem Stand der Technik (DE3533963A1) bekannt, am Hohlprofil des Spalierpfahls eine Quersicke vorzusehen, die eine zur Aufnahmelänge der Drahtaufnahme am Spalierpfahl kleinere Sickenweite aufweist. Diese Quersicke führt dazu, dass der Spanndraht der Drahtaufnahme, schräg ab einem Mindestwinkel entnommen werden muss, was ein unabsichtliches Entfernen des gespannten Spanndrahts aus der Drahtaufnahme erschwert - und somit eine Drahtsicherung schafft. Hierzu schließt die Quersicke an eine an demselben Schenkel des Hohlprofils vorgesehene Längssicke an, von deren Sickenboden ein Haken absteht, der mit dem Sickenboden die Drahtaufnahme für den Spanndraht ausbildet. Nachteilig offenbarte diese Drahtsicherung bei erzwungenen erhöhten Bewegungen des Spanndrahts - beispielsweise verursacht durch Erntemaschinen -, eine Tendenz, den Spanndraht aus der Drahtaufnahme entweichen zu lassen. Mit einem erheblichen Wartungsaufwand trotz Drahtsicherung am Spalierpfahl ist bei Vorrichtungen des Stands der Technik somit zu rechnen.

Die Erfindung hat sich daher ausgehend vom Stand der Technik die Aufgabe gestellt, einen Spalierpfahl mit einer Drahtsicherung für seine Drahtaufnahme der eingangs geschilderten Art derart konstruktiv zu verändern, dass damit der Spanndraht in der Drahtaufnahme standfest gesichert werden kann - und zwar selbst dann, wenn dieser Spanndraht vergleichsweise starken Bewegungen unterworfen wird. Zudem soll die Drahtsicherung konstruktiv möglichst einfach ausgebildet sein und kostengünstig am Spalierpfahl vorgesehen werden können.

Die Erfindung löst die gestellte Aufgabe dadurch, dass der Schenkel auf seiner anderen, zweiten Schenkelseite eine zweite, in Querrichtung des Hohlprofils verlaufende, offene und zurückspringende Quersicke aufweist, die an die Längssicke anschließt und beim Haken angeordnet ist, wobei diese zweite Quersicke mit ihrer im Vergleich zur Aufnahmelänge der Drahtaufnahme größeren Sickenweite zur Drahtsicherung aufgrund des der Drahtaufnahme schräg unter einem Maximalwinkel zu entnehmenden Spanndrahts ausgebildet ist.

Weist der Schenkel auf seiner anderen, zweiten Schenkelseite eine zweite, in Querrichtung des Hohlprofils verlaufende, offene und zurückspringende Quersicke auf, die an die Längssicke anschließt und beim Haken angeordnet ist, kann zunächst ein in der Drahtaufnahme vorgesehener Spanndraht beidseitig gegenüber einem unerwünschten Entfernen gesichert werden - eine besonders zuverlässige Sicherung ist somit geschaffen. Ist zudem diese zweite Quersicke mit ihrer im Vergleich zur Aufnahmelänge der Drahtaufnahme größeren Sickenweite zur Drahtsicherung aufgrund des der Drahtaufnahme schräg bis zu einem Maximalwinkel zu entnehmenden Spanndrahts ausgebildet, kann der Drahtsicherung des Spalierpfahls ein Winkelbreich aus Mindest- und Maximalwinkel vorgegeben werden, die für eine schräge Entnahme des Spanndrahts eingehalten werden muss. Dies schränkt die Gefahr eines unerwünschten Entweichens des Spanndrahts aus der Drahtaufnahme ein und kann besonders bei maschinengeschützter Ernte die vergleichsweise großen Bewegungen am Spanndraht vor der Drahtaufnahme abfangen. Der Spanndraht kann daher standfest in der Drahtaufnahme vorgesehen werden, womit ein besonders anwendungsfreundlicher Spalierpfahl zur Verfügung gestellt werden kann. Zudem ist das Vorsehen einer zweiten Quersicke am Schenkel konstruktiv vergleichsweise einfach möglich, beispielsweise mithilfe eines gemeinsamen Prägeschritts von erster und zweiter Quersicke, sodass der erfindungsgemäße Spalierpfahl gegenüber bekannten Spalierpfählen nicht nur konstruktiv einfach, sondern auch besonders kostengünstig herstellbar ist.

Ist der lichte Abstand des Hakens vom Sickenboden kleiner als die Sickentiefe der Längssicke, kann der Haken einen Spanndraht in die Längssicke zwängen und damit unter Zusammenwirken mit den Quersicken die Drahtsicherung weiter verbessern - ohne dass das Einbringen eines Spanndrahts erschwert wird. Zudem kann der Haken gegenüber unerwünschte Beschädigungen - beispielsweise vor Eindrücken in Richtung Längssicke, wie diese häufig etwa durch Erntemaschinen verursacht werden - geschützt werden. Ein besonders standfester und handhabungsfreundlicher Spalierpfahl kann so geschaffen werden.

Der Längsverlauf des Spanndrahts von den Quersicken zur Drahtaufnahme kann auf einfache Weise ausgerichtet und der Spanndraht sicher gehalten werden, wenn die Sickentiefen der Quersicken kleiner sind als die Sickentiefe der Längssicke.

Die Herstellung des Spalierpfahls kann sich weiter erleichtern, wenn das untere Ende der beiden Quersicken jeweils auf Höhe des Hakenbodens des Hakens am Schenkel angeordnet ist. Auf diese Weise kann auch das sichere Anbringen eines Spanndrahts erleichtert werden, da für diesen Spanndraht durch Hakenboden und Quersicken entsprechende Anschlagbegrenzungen ausgebildet werden können. Zudem können die so gegenüber dem Hakenboden ausgerichteten Sickenböden bzw. Sickenflanken von den Querstreben gemeinsam zur geradlinigen Führung des Spanndrahts beitragen. Die Längsbeweglichkeit des in der Drahtaufnahme gesicherte Spanndraht kann vergleichsweise leichtgängig bleiben, was das Spannen des Spanndrahts und damit die Handhabung des Spalierpfahls weiter erleichtern kann.

Ist der Haken federnd und mit dem vorspringend verlaufenden Sickenboden der zweiten Quersicke zur Ausbildung eines lösbaren Schnapphalters für den Spanndraht in der Drahtaufnahme zusammenwirkbar ausgebildet, kann die Drahtsicherung weiter verbessert werden. Bei einem federnden Haken kann der lichte Abstand der Drahtaufnahme nämlich auf einfache Weise vergrößert werden, was das Einbringen eines Spanndrahts erleichtert. Je nach Ausführung des Hakens bzw. des Sickenbodens kann der Schnapphalter den Spanndraht in der Drahtaufnahme mehr oder weniger stark zurückhalten, bevor dieser die Drahtsicherung mit der schrägen Entnahme des Spanndrahts wirksam wird. Erfindungsgemäß kann auch der erforderliche Kraftaufwand zum Einbringen eines Spanndrahts in die Drahtaufnahme vorgegeben - und somit auf die jeweiligen Gegebenheiten, etwa die Stärke des Spanndrahts, angepasst - werden. Auch ist es so möglich, bei Einbringen eines Spanndrahts durch das Überwinden des vorspringend verlaufenden Sickenbodens der zweiten Quersicke ein Einrasten des Spanndrahts zu erreichen, womit der dies durchführenden Person unter anderem die korrekte Anbringung des Spanndrahts vermittelbar ist. Auf diese Weise können also an die jeweiligen Anforderungen besonders gut abgestimmte Spalierpfähle zur Verfügung gestellt werden, die auch eine erheblich stärkere und sicheren Halterung des Spanndrahts aufweisen.

Vorstehende Vorteile können weiter verbessert werden, indem der Sickenboden der zweiten Quersicke gekrümmt vorspringend verläuft. So kann auch ein steigender und sich wieder verringernder Kraftaufwand zum Einbringen bzw. ein Einrasten des Spanndrahts in die Drahtsicherung zur Verfügung gestellt werden, was unter anderem der Handhabung des Spalierpfahls dienlich ist.

Indem das Hakenende des Hakens zum Sickenboden der Längssicke konvex gekrümmt ausläuft, kann das Vorsehen des Spanndrahts in die Drahtaufnahme in der Handhabung - unter anderem aufgrund eines dadurch vorsehbaren und für den Benutzer des Spalierpfahls wahrnehmbaren Einrastens - sicherer gestaltet und erleichtert werden. Zudem wird durch eine derartige Ausformung des Hakens ein besonders standfestes Halten eines Spanndrahts erreicht, da durch die konvexe Krümmung in Richtung Hakenende eine zusätzliche Begrenzung herstellbar ist. Insbesondere durch das Zusammenwirken dieses technischen Merkmals mit dem Merkmal, dass der lichte Abstand des Hakens vom Sickenboden kleiner als die Sickentiefe der Längssicke kann auch erreicht werden, dass stets ein besonders einfaches und sicheres Einbringen und Entfernen des Spanndrahts in und aus der Drahtaufnahme erfolgen.

Der konstruktive Aufwand im Bereich des Schnapphalters kann verringert werden, wenn das Hakenende und der Sickenboden der zweiten Quersicke zueinander konvex gekrümmt verlaufen. Auch ist dadurch einfache einstellbar, mit welchem Kraftaufwand ein Spanndraht in die Drahtaufnahme eingebracht und aus dieser wieder entfernt werden kann.

Die Haltekraft des Schnapphalters kann verbessert werden, wenn die Scheitelpunkte in den gekrümmten Verläufen von Hakenende und Sickenboden der zweiten Quersicke in Längsrichtung des Hohlprofils auf gleicher Höhe liegen.

Sind die Längssicke, die erste und zweite Quersicke als Trapezsicken, insbesondere mit gerundete Sickenkanten, ausgeführt, kann dies nicht nur die konstruktiven Anforderungen zur Herstellung des Hohlprofils reduzieren, sondern auch die mechanische Steifigkeit des Hohlprofils erhöhen. Ein kostengünstiger und standfester Spalierpfahl kann damit ermöglicht werden.

Eine kostengünstige Herstellung des Spalierpfahls kann sich ergeben, wenn das Hohlprofil aus einem umgeformten, insbesondere profilgewalztem, Metallblech besteht.

Diese Herstellung kann weiter vereinfacht werden, wenn die erste und zweite Quersicke einer Prägekontur am Hohlprofil folgend am ersten Schenkel verlaufen.
Der Spalierpfahl kann an beiden Schenkeln eine gesicherte Drahtaufnahme gewährleisten, wenn das Hohlprofil spiegelsymmetrisch zur Mittelebene ausgebildet ist.

Die Konstruktionsverhältnisse können vereinfacht werden, wenn das Hohlprofil im Querschnitt U-förmig verläuft.

Weist das Hohlprofil zwei einander gegenüberliegende Schenkel auf, deren Prägekontur, Haken, erste und zweite Quersicke einander spiegelsymmetrisch gegenüberliegen, kann ein besonders einfach herzustellender und vielseitig verwendbarer Spalierpfahl zur Verfügung gestellet werden.

In den Figuren ist beispielsweise der Erfindungsgegenstand anhand einer Ausführungsvariante näher dargestellt. Es zeigen
- Fig. 1: eine Seitenansicht auf einen abgerissenen dargestellten Spalierpfahl,
- Fig. 2: eine Stirnansicht auf ein Detail des nach Fig. 1 dargestellten Spalierpfahl und
- Fig. 3: eine Draufsicht auf den nach Fig. 1 dargestellten Spalierpfahl.

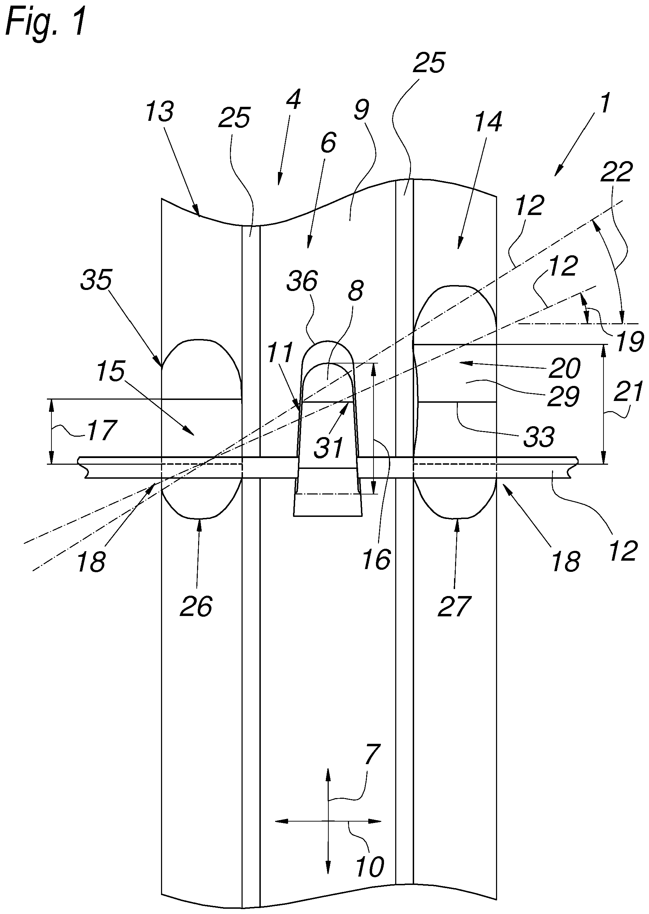

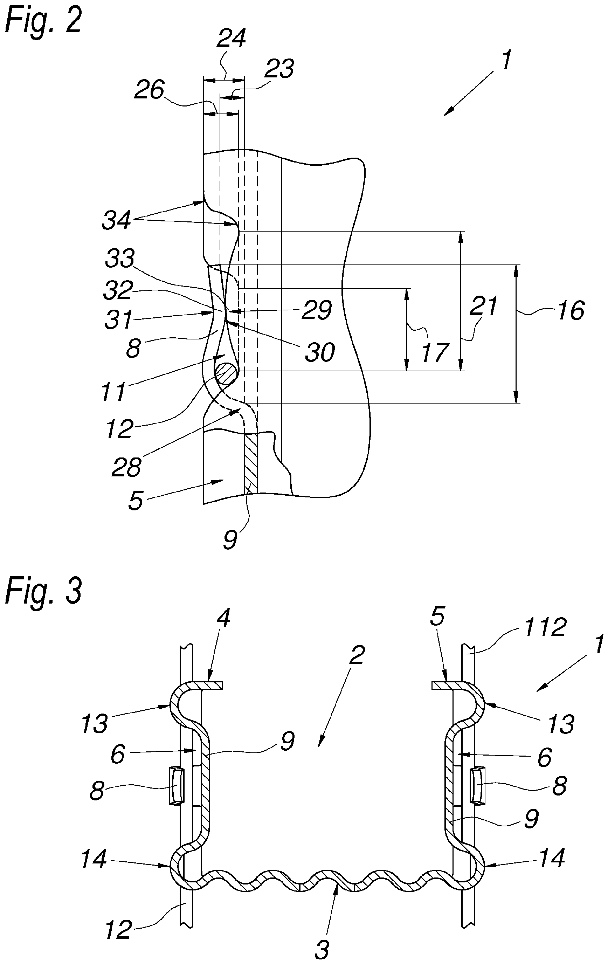

Der nach den Figuren 1 bis 3 beispielsweise dargestellte Spalierpfahl 1 für den Wein- oder Obstbau weist ein offenes und im Querschnitt U-förmige Hohlprofil 2 mit einem Steg 3 und mit zwei an den Steg 3 anschließenden Schenkeln 4, 5 auf - was insbesondere in der Fig. 3 erkannt werden kann. Anders konstruktiv ausgebildete Hohlprofile beispielsweise ein offenes L-Profil, C-Profil oder ein geschlossenes Kastenprofil etc. sind vorstellbar - was jedoch nicht dargestellt worden ist. Das Hohlprofil 2 kann beispielsweise aus einem umgeformten, insbesondere profilgewalzten, Metallblech, beispielsweise Stahlblech mit oder ohne Korrosionsbeschichtung, hergestellt werden.

Am ersten Schenkel 4 des Hohlprofils 1 - wobei dies selbstverständlich aufgrund der spiegelsymmetrischen Ausbildung des Hohlprofils 1 auch für den zweiten Schenkel 5 gilt - ist eine vom Verlauf des Schenkels 5 Richtung Innerem des Hohlprofils 1 zurückspringende Längssicke 6 vorgesehen, die offen ausgebildet ist. Die Längssicke 6 verläuft in Längsrichtung 7 über das Hohlprofil 2, wie dies insbesondere in den Figuren 1 und 2 erkannt werden kann. In der Längssicke 6 ist ein Haken 8 vorgesehen, der vom Sickenboden 9 der Längssicke 6 vom Hohlprofil 1 weg absteht und der aus dem entsprechend eingeschnittenen Sickenboden 9 geformt ist. Der Haken 8 bildet mit dem Sickenboden 9 der Längssicke 6 eine Drahtaufnahme 11 für einen Spanndraht 12 aus, um diesen am Spalierpfahl 1 zu halten.

Die Längssicke 6 teilt den Schenkel 4 mittig in zwei Schenkelseiten 13, 14. An der ersten Schenkelseite 13 ist eine erste, offene Quersicke 15 vorgesehen, die in Querrichtung 10 des Hohlprofils 2 verläuft und gegenüber dem Schenkel 4 in Richtung Inneres des Hohlprofils 2 zurückspringt. Diese Quersicke 15 schließt an die Längssicke 6 an und weist im Vergleich zur Aufnahmelänge 16 der Drahtaufnahme 11 eine kleinere Sickenweite 17 auf. Da die erste Quersicke 15 beim Haken 8 angeordnet ist, wird damit eine Drahtsicherung 18 geschaffen, die den in der Drahtaufnahme 11 vorgesehenen Spanndraht 12 vor einen unerwünschten Entfernen schützen kann. Die Quersicke 15 wirkt nämlich mit der Drahtaufnahme 11 derart zusammen, dass der Spanndraht 12 der Drahtaufnahme 11 nur schräg unter einem Mindestwinkel 19 entnommen werden kann - und damit vergleichsweise geringfügige Bewegungen des Spanndrahts 12 nicht ermöglichen, den Spanndraht 12 vom Spalierpfahl 1 zu lösen.

Um aber auch vergleichsweise große Bewegungen am Spanndraht 12 abzufangen - welche beispielsweise von Erntemaschinen verursacht werden - wird erfindungsgemäß vorgeschlagen, dass am ersten Schenkel 4 eine zweite Quersicke 20 vorgesehen wird. Diese zweite Quersicke 20 ist ähnlich zur ersten Quersicke 15 offen ausgebildet, in Querrichtung 10 des Hohlprofils 2 verlaufend und gegenüber dem ersten Schenkel 4 Richtung Innerem des Hohlprofils 2 zurückspringend, an die Längssicke 6 anschließend ausgebildet. Diese zweite Quersicke 20 ist ebenfalls beim Haken 8 angeordnet und befindet sich an der anderen, zweiten Schenkelseite 14 des Schenkels 4. Sie weist allerdings eine im Vergleich zur Aufnahmelänge 16 der Drahtaufnahme 11 größere Sickenweite 21 auf. Damit wird die Drahtsicherung 18 erfindungsgemäß mit der Vorgabe der Erfüllung einer zweiten Bedingung zur Entnahme des Spanndrahts 12 aus der Drahtaufnahme 11 versehen - nämlich, indem der Spanndraht 12 der Drahtaufnahme 11 schräg bis zu einem Maximalwinkel 22 entnehmbar ist. Für die Entnahme des Spanndrahts 12 spannt sich daher ein Winkelbereich gebildet durch den Minimal- und Maximalwinkel 19, 22 auf, der erfüllt werden muss. Damit ergibt sich eine robuste Drahtsicherung 18, die ein unerwünschtes Lösen des Spanndrahts 12 unterbinden kann.

Entsprechend der Fig. 2 ist zu erkennen, dass der lichte Abstand 23 des Hakens 8 zum Sickenboden 9 kleiner ist als die Sickentiefe 24 der Längssicke 6. Damit ist der Haken 8 durch die beiden Sickenflanken 25 der Längssicke 6 ausreichend gegenüber unerwünschten Verformungen - etwa aufgrund von Erntemaschinen - geschützt, was die Standfestigkeit und Handhabungsfreundlichkeit des Spalierpfahls 1 erhöht.

Zudem ist die Sickentiefe 26 der Quersicken 15, 20 kleiner als die Sickentiefe 24 der Längssicke 6. Dies vermeidet ein Aufliegen des Spanndrahts 12 am Sickenboden 9 der Längssicke 6 und reduziert somit die Reibung zwischen Spalierpfahl 1 und dem Spanndraht 12. Trotz des sicheren Halts des Spanndrahts 12 am Spalierpfahl 1 ist damit die Leichtgängigkeit des Spanndrahts 12 in seiner Drahterstreckung nicht verringert - was beispielsweise das Spannen des Spanndrahts 12 erleichtert.

Indem je die unteren Enden der beiden Quersicken 15, 20 auf Höhe des Hakenbodens 28 des Hakens 8 am Schenkel 4 angeordnet sind, bildet sich eine lineare Führung des Spanndrahts 12 in Querrichtung 10 des Spalierpfahls 1 aus, was der Leichtgängigkeit des so gehaltenen Spanndrahts 12 förderlich ist. Auch die geradlinigen Führung und das sichere bzw. korrekte Anbringen des Spanndrahts werden verbessert, da für diesen durch Hakenboden und Quersicken entsprechende Anschlagbegrenzungen ausgebildet werden können.

Der Haken 8 ist federnd ausgebildet, unter anderem, um durch Vergrößerung des lichten Abstands der Drahtaufnahme 11 das Einbringen des Spanndrahts 12 zu erleichtern. Zudem weist der Sickenboden 29 der zweiten Quersicke 20 einen gekrümmt vorspringenden Verlauf auf, was den Spanndraht 12 zusätzlich in der Drahtaufnahme 11 sichert - nämlich, indem Sickenboden 29 der zweiten Quersicke 20 und federnder Haken 8 zusammenwirken, einen lösbaren Schnapphalter 30 für den Spanndraht 12 in der Drahtaufnahme 11 auszubilden. Diese Schnappfunktion kann nicht dem Benutzer des Spalierpfahls nicht nur die korrekte Einbringung des Spanndrahts 12 in die Drahtaufnahme 11 signalisieren. Dadurch, dass das Hakenende 31 des Hakens 8 zum Sickenboden 9 der Längssicke 6 konvex gekrümmt ausläuft, kann auch ein besonders sicheres Halten des Spanndrahts 12 gewährleistet werden - nicht zuletzt, weil die Scheitelpunkte 32, 33 der konvex gekrümmten Verläufe von Hakenende 31 und Sickenboden 29 der zweiten Quersicke 20 auf gleicher Höhe des Spalierpfahls 1 liegen und so eine besonders vorteilhafte Schnappfunktion.

Je nach Ausführung des Hakens bzw. des Sickenbodens kann der Schnapphalter den Spanndraht in der Drahtaufnahme mehr oder weniger stark zurückhalten, bevor dieser die Drahtsicherung mit der schrägen Entnahme des Spanndrahts wirksam wird. Erfindungsgemäß kann auch der erforderliche Kraftaufwand zum Einbringen eines Spanndrahts in die Drahtaufnahme vorgegeben - und somit auf die jeweiligen Gegebenheiten, etwa die Stärke des Spanndrahts, angepasst - werden. Auch ist es so möglich, bei Einbringen eines Spanndrahts durch das Überwinden einen vorspringend verlaufenden Sickenboden der zweiten Quersicke ein Einrasten des Spanndrahts zu erreichen, womit der dies durchführenden Person unter anderem dessen korrekte Anbringung vermittelbar ist. Auf diese Weise können also an die jeweiligen Anforderungen besonders gut abgestimmte Spalierpfähle zur Verfügung gestellt werden, die auch eine erheblich stärkere und sicheren Halterung des Spanndrahts aufweisen.

Wie zudem den Figuren entnommen werden kann, handelt es sich bei der Form der offenen Sicken, nämlich Längssicke 6 und Quersicken 15, 20 um Trapezsicken mit gerundeten Sickenkanten 34, was den Herstellungsaufwand reduziert. Dieser Herstellungsaufwand bleibt auch dadurch gering, dass die Sicken, nämlich Längssicke 6 und Quersicken 15, 20, in das Hohlprofil 2 geprägt werden und damit einer Prägekontur 35 am Hohlprofil 2 folgend am ersten Schenkel 4 verlaufen.

Die diesbezügliche Schnittöffnung 36 im Sickenboden 9 zur Ausbildung des Hakens 8 ist beispielsweise der Fig. 1 zu entnehmen.

Die beiden Schenkel 4, 5 sind einander gegenüberliegend, wobei deren Prägekontur, Haken 8, erste und zweite Quersicke 15, 20 einander spiegelsymmetrisch gegenüberliegen. Dies ermöglicht eine besonders einfache Herstellung und auch Verwendung des erfindungsgemäßen Spalierpfahls 1.

## Patentansprüche

1. Spalierpfahl für den Wein- oder Obstbau mit einem, insbesondere offenen, Hohlprofil (2), das mindestens einen Schenkel (4, 5) aufweist, wobei dieser Schenkel (4, 5) eine in Längsrichtung (7) des Hohlprofils (2) verlaufende, offene und zurückspringende Längssicke (6) mit mindestens einem von ihrem Sickenboden (9) abstehenden Haken (8) aufweist, der mit dem Sickenboden (9) eine Drahtaufnahme (11) für einen Spanndraht (12) ausbildet, und wobei dieser, durch die Längssicke (6) in zwei Schenkelseiten (13, 14) geteilte Schenkel (4, 5) auf seiner ersten Schenkelseite (13) eine erste in Querrichtung (10) des Hohlprofils (2) verlaufende, offene und zurückspringende Quersicke (15) aufweist, die an die Längssicke (6) anschließt und beim Haken (8) angeordnet ist, wobei diese erste Quersicke (15) mit ihrer im Vergleich zur Aufnahmelänge (16) der Drahtaufnahme (11) kleineren Sickenweite (17) zur Drahtsicherung (18) aufgrund des der Drahtaufnahme (11) schräg ab einem Mindestwinkel (19) zu entnehmenden Spanndrahts (12) ausgebildet ist, **dadurch gekennzeichnet, dass** der Schenkel (4, 5) auf seiner anderen, zweiten Schenkelseite (14) eine zweite, in Querrichtung (10) des Hohlprofils (2) verlaufende, offene und zurückspringende Quersicke (20) aufweist, die an die Längssicke (6) anschließt und beim Haken (8) angeordnet ist, wobei diese zweite Quersicke (20) mit ihrer im Vergleich zur Aufnahmelänge (16) der Drahtaufnahme (11) größeren Sickenweite (21) zur Drahtsicherung (18) aufgrund des der Drahtaufnahme (11) schräg bis zu einem Maximalwinkel (22) zu entnehmenden Spanndrahts (12) ausgebildet ist.

2. Spalierpfahl nach Anspruch 1, **dadurch gekennzeichnet, dass** der lichte Abstand (23) des Hakens (8) vom Sickenboden (9) kleiner ist als die Sickentiefe (24) der Längssicke (6).

3. Spalierpfahl nach Anspruch 1 oder 2, **dadurch gekennzeichnet, dass** die Sickentiefen (26) der Quersicken (15, 20) kleiner sind als die Sickentiefe (24) der Längssicke (6).

4. Spalierpfahl nach Anspruch 1, 2 oder 3, **dadurch gekennzeichnet, dass** das untere Ende (26, 27) der beiden Quersicken (15, 20) jeweils auf Höhe des Hakenbodens (28) des Hakens (8) am Schenkel (4, 5) angeordnet ist.

5. Spalierpfahl nach einem der Ansprüche 1 bis 4, **dadurch gekennzeichnet, dass** der Haken (8) federnd und mit dem vorspringend verlaufenden Sickenboden (29) der zweiten Quersicke (20) zur Ausbildung eines lösbaren Schnapphalters (30) für den Spanndraht (12) in der Drahtaufnahme (11) zusammenwirkbar ausgebildet ist.

6. Spalierpfahl nach Anspruch 5, **dadurch gekennzeichnet, dass** der Sickenboden (29) der zweiten Quersicke (20) gekrümmt vorspringend verläuft.

7. Spalierpfahl nach einem der Ansprüche 1 bis 6, **dadurch gekennzeichnet, dass** das Hakenende (31) des Hakens (8) zum Sickenboden (9) der Längssicke (6) konvex gekrümmt ausläuft.

8. Spalierpfahl nach den Ansprüchen 6 und 7, **dadurch gekennzeichnet, dass** das Hakenende (31) und der Sickenboden (29) der zweiten Quersicke (20) zueinander konvex gekrümmt verlaufen.

9. Spalierpfahl nach Anspruch 8, **dadurch gekennzeichnet, dass** die Scheitelpunkte (32, 33) in den gekrümmten Verläufen von Hakenende (31) und Sickenboden (29) der zweiten Quersicke (20) in Längsrichtung (7) des Hohlprofils (2) auf gleicher Höhe liegen.

10. Spalierpfahl nach einem der Ansprüche 1 bis 9, **dadurch gekennzeichnet, dass** die Längssicke (6), die erste (15) und zweite Quersicke (20) als Trapezsicken, insbesondere mit gerundete Sickenkanten, ausgeführt sind.

11. Spalierpfahl nach einem der Ansprüche 1 bis 10, **dadurch gekennzeichnet, dass** das Hohlprofil (2) aus einem umgeformten, insbesondere profilgewalztem, Metallblech besteht.

12. Spalierpfahl nach einem der Ansprüche 1 bis 11, **dadurch gekennzeichnet, dass** die erste und zweite Quersicke (15, 20) einer Prägekontur folgend am Schenkel (4, 5) verlaufen.

13. Spalierpfahl nach einem der Ansprüche 1 bis 12, **dadurch gekennzeichnet, dass** das Hohlprofil (2) im Querschnitt U-förmig verläuft.

14. Spalierpfahl nach einem der Ansprüche 1 bis 13, **dadurch gekennzeichnet, dass** das Hohlprofil (2) zwei einander gegenüberliegende Schenkel (4, 5) aufweist, deren Prägekontur, Haken (8), erste und zweite Quersicke (15, 20) einander spiegelsymmetrisch gegenüberliegen.

## Claims

1. A trellis post for viticulture or fruit growing, comprising an, more particularly open, hollow profile (2), which has at least one leg (4, 5), wherein this leg (4, 5) has an open and recessed longitudinal bead (6), which extends in the longitudinal direction (7) of the hollow profile (2), having at least one hook (8) protruding from its bead base (9), which forms a wire receptacle (11) with the bead base (9), for a tensioning wire (12),
and wherein this leg (4, 5), which is divided into two leg sides (13, 14) by the longitudinal bead (6), has a first open and recessed transverse bead (15) on its first leg side (13), which extends in the transverse direction (10) of the hollow profile (2), which adjoins the longitudinal bead (6) and is arranged at the hook (8), wherein this first transverse bead (15) is formed with its smaller bead width (17) in comparison to the receptacle length (16) of the wire receptacle (11) for wire securing (18) because of the clamping wire (12), which is to be taken from the wire receptacle (11) diagonally from a minimum angle (19), **characterized in that** the leg (4, 5) has, on its other, second leg side (14), a second open and recessed transverse bead (20), which extends in the transverse direction (10) of the hollow profile (2), and which adjoins the longitudinal bead (6) and is arranged at the hook (8), wherein this second transverse bead (20) is formed with its larger bead width (21) in comparison to the receptacle length (16) of the wire receptacle (11) for wire securing (18) because of the clamping wire (12), which is to be taken from the wire receptacle (11) diagonally up to a maximum angle (22).

2. The trellis post according to claim 1, **characterized in that** the clearance (23) of the hook (8) from the bead base (9) is less than the bead depth (24) of the longitudinal bead (6).

3. The trellis post according to claim 1 or 2, **characterized in that** the bead depths (26) of the transverse beads (15, 20) are less than the bead depth (24) of the longitudinal bead (6).

4. The trellis post according to claim 1, 2, or 3, **characterized in that** the lower end (26, 27) of each of the two transverse beads (15, 20) is arranged at the height of the hook base (28) of the hook (8) on the leg (4, 5).

5. The trellis post according to any one of claims 1 to 4, **characterized in that** the hook (8) is formed in a resilient manner and able to interact with the protruding extending bead base (29) of the second transverse bead (20) to form a detachable snap holder (30) for the tensioning wire (12) in the wire receptacle (11).

6. The trellis post according to claim 5, **characterized in that** the bead base (29) of the second transverse bead (20) extends protruding in a curve.

7. The trellis post according to any one of claims 1 to 6, **characterized in that** the hook end (31) of the hook (8) terminates in a convexly curved manner in relation to the bead base (9) of the longitudinal bead (6).

8. The trellis post according to claims 6 and 7, **characterized in that** the hook end (31) and the bead base (29) of the second transverse bead (20) extend convexly curved in relation to one another.

9. The trellis post according to claim 8, **characterized in that** the vertexes (32, 33) in the curved profiles of hook end (31) and bead base (29) of the second transverse bead (20) are located at the same height in the longitudinal direction (7) of the hollow profile (2).

10. The trellis post according to any one of claims 1 to 9, **characterized in that** the longitudinal bead (6), the first (15) and second transverse bead (20), are embodied as trapezoidal beads, more particularly having rounded bead edges.

11. The trellis post according to any one of claims 1 to 10, **characterized in that** the hollow profile (2) consists of formed, in particular profile-rolled metal plate.

12. The trellis post according to any one of claims 1 to 11, **characterized in that** the first and second transverse bead (15, 20) extend on the leg (4, 5) following an embossed contour.

13. The trellis post according to any one of claims 1 to 12, **characterized in that** the hollow profile (2) extends in a U shape in cross section.

14. The trellis post according to any one of claims 1 to 13, **characterized in that** the hollow profile (2) has two legs (4, 5) opposite to one another, the embossed contour, hooks (8), and first and second transverse beads (15, 20) of which are mirror-symmetrically opposite to one another.

## Revendications

1. Poteau de palissage pour la viticulture ou la fruiticulture, comprenant un profilé creux (2), en particulier ouvert, qui présente au moins une aile (4, 5), laquelle aile (4, 5) présente une moulure longitudinale (6) ouverte et en retrait, s'étendant dans la direction longitudinale (7) du profilé creux (2), avec au moins un crochet (8) faisant saillie de son fond de moulure (9), lequel forme avec le fond de moulure (9) un logement de fil (11) pour un fil tendeur (12), et laquelle aile (4, 5), divisée en deux côtés d'aile (13, 14) par la moulure longitudinale (6), présente sur son premier côté d'aile (13) une première moulure transversale (15) ouverte et en retrait, s'étendant dans la direction transversale (10) du profilé creux (2), qui se raccorde à la moulure longitudinale (6) et est disposée au niveau du crochet (8), cette première moulure transversale (15) étant conçue, avec sa largeur de moulure (17) plus petite par rapport à la longueur de logement (16) du logement de fil (11), pour le blocage de fil (18) en raison du fil tendeur (12) à retirer en biais du logement de fil (11) à partir d'un angle minimal (19), **caractérisé en ce que** l'aile (4, 5) présente sur son autre, deuxième côté d'aile (14) une deuxième moulure transversale (20) ouverte et en retrait, s'étendant dans la direction transversale (10) du profilé creux (2), qui se raccorde à la moulure longitudinale (6) et est disposée au niveau du crochet (8), cette deuxième moulure transversale (20) étant conçue, avec sa largeur de moulure (21) plus grande par rapport à la longueur de logement (16) du logement de fil (11), pour le blocage de fil (18) en raison du fil tendeur (12) à retirer en biais du logement de fil (11) jusqu'à un angle maximal (22).

2. Poteau de palissage selon la revendication 1, **caractérisé en ce que** la distance libre (23) entre le crochet (8) et le fond de moulure (9) est plus petite que la profondeur de moulure (24) de la moulure longitudinale (6).

3. Poteau de palissage selon la revendication 1 ou 2, **caractérisé en ce que** les profondeurs de moulure (26) des moulures transversales (15, 20) sont plus petites que la profondeur de moulure (24) de la moulure longitudinale (6).

4. Poteau de palissage selon la revendication 1, 2 ou 3, **caractérisé en ce que** l'extrémité inférieure (26, 27) des deux moulures transversales (15, 20) est chaque fois disposée à hauteur du fond de crochet (28) du crochet (8) sur l'aile (4, 5).

5. Poteau de palissage selon l'une des revendications 1 à 4, **caractérisé en ce que** le crochet (8) est conçu élastique et apte à coopérer avec le fond de moulure (29) s'étendant en saillie de la deuxième moulure transversale (20) pour réaliser un élément de retenue par encliquetage libérable (30) pour le fil tendeur (12) dans le logement de fil (11).

6. Poteau de palissage selon la revendication 5, **caractérisé en ce que** le fond de moulure (29) de la deuxième moulure transversale (20) s'étend en saillie de manière courbe.

7. Poteau de palissage selon l'une des revendications 1 à 6, **caractérisé en ce que** l'extrémité de crochet (31) du crochet (8) se termine en une courbure convexe par rapport au fond de moulure (9) de la moulure longitudinale (6).

8. Poteau de palissage selon les revendications 6 et 7, **caractérisé en ce que** l'extrémité de crochet (31) et le fond de moulure (29) de la deuxième moulure transversale (20) s'étendent suivant une courbure convexe l'une par rapport à l'autre.

9. Poteau de palissage selon la revendication 8, **caractérisé en ce que** les sommets (32, 33) des courbures de l'extrémité de crochet (31) et du fond de moulure (29) de la deuxième moulure transversale (20) se situent à la même hauteur dans la direction longitudinale (7) du profilé creux (2).

10. Poteau de palissage selon l'une des revendications 1 à 9, **caractérisé en ce que** la moulure longitudinale (6), la première (15) et la deuxième moulure transversale (20) sont réalisées sous la forme de moulures trapézoïdales, en particulier avec des arêtes de moulures arrondies.

11. Poteau de palissage selon l'une des revendications 1 à 10, **caractérisé en ce que** le profilé creux (2) est constitué d'une tôle métallique mise en forme, en particulier laminée.

12. Poteau de palissage selon l'une des revendications 1 à 11, **caractérisé en ce que** la première et la deuxième moulure transversale (15, 20) s'étendent sur l'aile (4, 5) en suivant un contour d'estampage.

13. Poteau de palissage selon l'une des revendications 1 à 12, **caractérisé en ce que** le profilé creux (2) s'étend en forme de U en section transversale.

14. Poteau de palissage selon l'une des revendications 1 à 13, **caractérisé en ce que** le profilé creux (2) présente deux ailes (4, 5) se faisant face, dont le contour d'estampage, le crochet (8), la première et la deuxième moulure transversale (15, 20) se font face en symétrie miroir.
